(19) Europäisches Patentamt
European Patent Office
Office européen des brevets

(11) Veröffentlichungsnummer: **0 491 144 A2**

(12) # EUROPÄISCHE PATENTANMELDUNG

(21) Anmeldenummer: **91118369.7**

(51) Int. Cl.$^5$: **C08G 77/54**

(22) Anmeldetag: **29.10.91**

(30) Priorität: **19.12.90 DE 4040568**

(43) Veröffentlichungstag der Anmeldung:
**24.06.92 Patentblatt 92/26**

(84) Benannte Vertragsstaaten:
**AT BE CH DE DK ES FR GB IT LI LU NL SE**

(71) Anmelder: **Degussa Aktiengesellschaft**
**Weissfrauenstrasse 9**
**W-6000 Frankturt am Main 1(DE)**

(72) Erfinder: **Götz, Peter, Dr.**
**Gutenbergstrasse 6b**
**W-6365 Rosbach(DE)**
Erfinder: **Wieland, Stefan, Dr.**
**Starkenburgring 27**
**W-6050 Offenbach(DE)**
Erfinder: **Panster, Peter, Dr.**
**Im Lochseif 8**
**W-6458 Rodenbach(DE)**
Erfinder: **Goor, Gustaaf, Dr.**
**Gleiwitzerstrasse 1**
**W-6450 Hanau 9(DE)**
Erfinder: **Siegmeier, Rainer, Dr.**
**Anspacher Strasse 35**
**W-6380 Bad Homburg(DE)**

(54) **Polymere Organosiloxanammoniumsalze von Oxosäuren der Elemente V, Nb, Ta, Mo und W, Verfahren zu ihrer Herstellung und Verwendung.**

(57) Die Erfindung betrifft polymere, ein kieselsäureartiges Grundgerüst aufweisende Organosiloxanammoniumsalze aus Einheiten

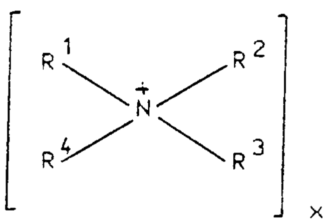

$X^{x-}$ (I),

in welcher $R^1$ und $R^2$ gleich oder verschieden sind und eine Gruppe der allgemeinen Formel

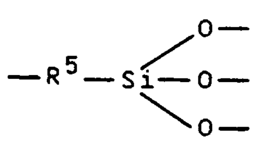

(II)

bedeuten, wobei $R^5$ eine Alkylengruppierung ist und die Sauerstoffatome durch Siliciumatome weiterer Gruppen (II), ggf. unter Einbau von Vernetzern, abgesättigt sind, $R^3$ die Bedeutung von $R^1$ oder $R^2$, Wasserstoff oder einer Alkylgruppe und $R^4$ die Bedeutung von Wasserstoff oder einer Alkylgruppe hat und x die Ladungszahl eines Oxoanions einer Monooxo-, Isopolyoxo- oder Heteropolyoxosäure der Elemente Vanadium, Niob, Tantal, Molybdän oder Wolfram ist, wobei Oxogruppen des Anions X auch durch Peroxogruppen ersetzt sein können.

EP 0 491 144 A2

Weitere Gegenstände der Erfindung sind Verfahren zur Herstellung der Salze (I) aus vorbekannten Salzen vom Typ $[R^1R^2R^3R^4N^+]_yY$ mit Y ungleich X sowie die Verwendung der Salze (I) als Katalysator für Oxidationsreaktionen unter Verwendung von Peroxoverbindungen als Oxidationsmittel.

Gegenstand der Erfindung sind polymere, ein kieselsäureartiges Grundgerüst aufweisende Organosiloxanammoniumsalze von Oxosäuren der Elemente Vanadium, Niob, Tantal, Molybdän und Wolfram, wobei unter Oxosäuren die einfachen Oxosäuren, Isopolyoxo- und Heteropolyoxosäuren verstanden werden und eine oder mehrere Oxogruppen auch durch Peroxogruppen ersetzt sein können. Weitere Gegenstände richten sich auf die Herstellung der genannten Salze sowie die Verwendung der Salze als Katalysator für Oxidationsreaktionen, insbesondere solchen unter Verwendung von Wasserstoffperoxid als Oxidationsmittel.

Polymere Organosiloxanammoniumsalze mit kieselsäureartigem Grundgerüst sind aus der DE-PS 31 20 195 bekannt. Eine Weiterentwicklung der dort beschriebenen Salze zu makroskopisch kugelförmigen Teilchen mit spezifischen Eigenschaften wurde in der DE-PS 38 00 564 offenbart. Die den Salzen der DE-PS 38 00 564 zugrundeliegende makroskopisch kugelförmigen, polymeren tertiären oder sekundären Organosiloxanaminverbindungen, welche sich durch Quaternisierung mit beispielsweise Alkylhalogeniden oder durch Umsetzung mit einer Protonensäure in Salze überführen lassen, sind in der DE-PS 38 00 563 beschrieben. Der Inhalt der genannten deutschen Patentschriften 31 20 195, 38 00 563 und 38 00 564 wird in die Offenbarung der vorliegenden Erfindung voll einbezogen.

Die polymeren Salze der DE-PS 31 20 195 und DE-PS 38 00 564 bestehen aus Einheiten der allgemeinen Formel

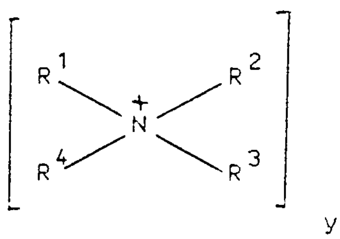

$Y^{y-}$ (III)

in welcher $R^1$ und $R^2$ gleich oder verschieden sind und eine Gruppe der allgemeinen Formel

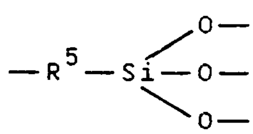

(II)

bedeuten, wobei die Stickstoffatome in (I) über die Reste $R^5$ mit den Siliciumatomen in (II) verbunden sind und $R^5$ eine Alkylengruppe mit 1 bis 10 C-Atomen, eine Cycloalkylengruppe mit 5 bis 8 C-Atomen oder eine Einheit der allgemeinen Formel

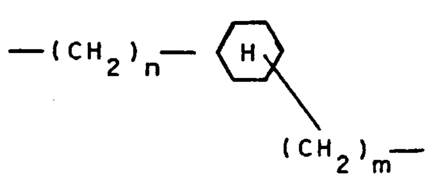

oder

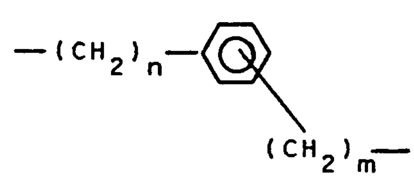

darstellt, in der n eine Zahl von 1 bis 6 ist und die Zahl der stickstoffständigen Methylengruppen angibt und m eine Zahl von 0 bis 6 ist, und wobei die freien Valenzen der an das Siliciumatom gebundenen Sauerstoffatome wie bei Kieselsäuregerüsten durch Siliciumatome weiterer Gruppen der Formel (II) und/oder mit den Metallatomen einer oder mehrerer der vernetzenden Brückenglieder

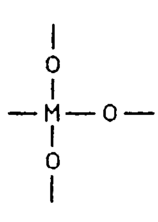

oder

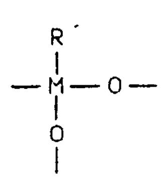

oder

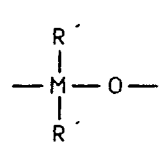

oder

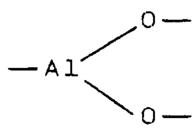

oder

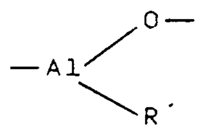

abgesättigt sind, wobei M ein Silicium-, Titan- oder Zirkoniumatom und R' eine lineare oder verzweigte Alkylgruppe mit 1 bis 5 C-Atomen ist und das Verhältnis der Siliciumatome aus den Gruppen der allgemeinen Formel (II) zu den Metallatomen in den Brückengliedern 1:0 bis 1:10 beträgt, und in welcher $R^3$ gleich $R^1$ oder $R^2$ oder Wasserstoff, eine lineare oder verzweigte Alkylgruppe aus 1 bis 20 C-Atomen, eine aus 5 bis 8 C-Atomen bestehende Cycloalkylgruppe oder die Benzylgruppe ist und $R^4$ gleich Wasserstoff, eine lineare oder verzweigte Alkylgruppe mit 1 bis 20 C-Atomen oder eine aus 5 bis 8 C-Atomen bestehende Cycloalkyl-, Benzyl-, Allyl-, Propargyl-, Chlorethyl-, Hydroxyethyl-, Chlorpropylgruppe und Y ein Anion mit der Wertigkeit von y gleich 1 bis 3 aus der Gruppe Halogenid, Hypochlorit, Sulfat, Hydrogensulfat, Nitrit, Nitrat, Phosphat, Dihydrogenphosphat, Hydrogenphosphat, Carbonat, Hydrogencarbonat, Hydroxid, Chlorat, Perchlorat, Chromat, Dichromat, Cyanid, Cyanat, Rhodanid, Sulfid, Hydrogensulfid, Selenid, Tellurid, Borat, Metaborat, Azid, Tetrafluorborat, Tetraphenylborat, Hexafluorophosphat, Formiat, Acetat, Propionat, Oxalat, Trifluoroacetat, Trichloracetat oder Benzoat ist.

Aus den genannten Dokumenten ist auch bekannt, daß das Anion Y in den polymeren Salzen (III) durch statischen oder dynamischen Ionenaustausch gegen ein anderes Anion aus der vorgenannten Reihe ausgetauscht werden kann.

Als Verwendungszweck für die polymeren Organosiloxanammoniumsalze werden in den genannten Dokumenten Ionenaustauscher, Adsorber, Katalysatorträger und Wirkstoffträger angegeben. Bezüglich der Auswahl des Anions X für ganz bestimmte, in Gegenwart heterogener Katalysatoren durchgeführte Reaktionen, lassen sich diesen Dokumenten keine Hinweise entnehmen.

Oxidationsreaktionen unter Verwendung von Peroxoverbindungen, insbesondere Wasserstoffperoxid, lassen sich bekanntlich mittels Oxoverbindungen von beispielsweise Molybdän und Wolfram, aber auch Vanadium katalysieren. Die intermediäre Bildung von Peroxosäuren von Mo, W und V wird dabei als der wesentliche Schritt angesehen. Unter den so katalysierten Oxidationsreaktionen sind beispielsweise die Olefinepoxidation, die Olefinhydroxylierung, die Olefinspaltung, die Oximbildung aus Ketonen mit Ammoniak und Wasserstoffperoxid, die Sulfenamidbildung aus einem Thiol, einem Amin und Wasserstoffperoxid sowie die Oxidation von Thiolen zu höher oxidierten Schwefelverbindungen zu nennen - siehe Prospekt der Firma Peroxid-Chemie GmbH "$H_2O_2$ in der organischen Synthese" A 0.1.2.d1D-381. Nachteilig an der Verwendung der genannten Katalysatoren ist, daß die Rückgewinnung der gelösten Katalysatoren technisch aufwendig ist, und daher die Wirtschaftlichkeit der Oxidationsreaktionen häufig in Frage gestellt ist. Die Verwendung von z. B. Molybdat oder Wolframat beladenen Anionenaustauschern auf der Basis organischer Polymerer stellt wegen der im allgemein unzureichenden thermischen, mechanischen und chemischen Stabilität praktisch keine befriedigende Lösung dar.

Aufgabe der vorliegenden Erfindung ist daher, die Palette der verfügbaren polymeren Organosiloxanammoniumverbindungen zu erweitern. Eine weitere Aufgabe besteht darin, diese Verbindungen so herzustellen, daß die gewünschten physikalischen Eigenschaften und eine hohe katalytische Aktivität gewährleistet sind. Schließlich sollten sich die erfindungsgemäßen neuen Verbindungen als heterogene Katalysatoren für Oxidationsreaktionen eignen und nicht die Nachteile der vorbekannten heterogenen Katalysatoren aufweisen.

Gefunden wurden die in den Stoffansprüchen gekennzeichneten Produkte der Formel (I)

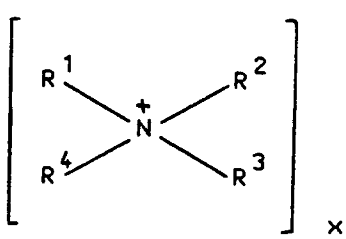

$X^{x-}$ (I) ,

worin $R^1$, $R^2$, $R^3$ und $R^4$ die gleiche Bedeutung wie in Formel (III) haben und x die Ladungszahl des Anions X ist.

Diese polymeren Organosiloxanammoniumsalze sind dadurch gekennzeichnet, daß X ein Anion einer Monooxo-, Isopolyoxo- oder Heteropolyoxosäure der Elemente Vanadium, Niob, Tantal, Molybdän oder Wolfram ist, wobei eine oder mehrere Oxogruppen des Anions durch Peroxogruppen ersetzt sein können und ein Element aus der Reihe Bor, Silicium, Germanium, Phosphor, Arsen, Jod, Tellur, Zinn, Titan, Zirkonium, Hafnium und Cer als Heteroatom in den Heteropolyoxysäuren fungiert.

Die Anionen der erfindungsgemäßen Salze weisen unterschiedliche Strukturen und Wertigkeiten auf. Welche Struktur vorliegt, ist stark pH-abhängig - während in alkalischen Lösungen im wesentlichen die Mono-oxoanionen vorliegen, kondensieren diese mit fallendem pH-Wert zu den Isopolyoxoanionen. In den polymeren Salzen können somit auch mehrere Anionen unterschiedlicher Struktur anwesend sein. In Gegenwart von Wasserstoffperoxid lassen sich zudem Oxogruppen durch Peroxogruppen ersetzen, wobei die Struktur und Stabilität der Peroxogruppen enthaltenden Anionen wiederum pH-abhängig ist. Eine Übersicht über mögliche Strukturen der Monooxo-, Isopolyoxo- und Heteropolyoxoanionen einschließlich der Peroxogruppen enthaltenen Systeme vermittelt beispielsweise das Lehrbuch der anorganischen Chemie von H. Remy, Band II (1961), Seiten 125-128 (Vanadate), 132-134 (Niobate), 138-139 (Tantalate), 204-207 (Molybdate) und 215-225 (Wolframate). Unter den Mono-oxoanionen sind insbesondere zu nennen: Ortho- und Metavanadat ($VO_3^{3-}$ und $VO_3^{-}$), Metaniobat ($NbO_3^{-}$), Metatantalat ($TaO_3^{-}$), Monomolybdat ($MoO_4^{2-}$) und Monowolframat ($WO_4^{2-}$). Unter den Isopolysäureanionen sind hervorzuheben: $V_2O_7^{4-}$, $V_4O_{12}^{4-}$, $V_{10}O_{28}^{6-}$, $Nb_5O_{16}^{7-}$ und $Ta_5O_{16}^{7-}$, $HMo_6O_{21}^{5-}$, $Mo_7O_{24}^{6-}$, $Mo_8O_{26}^{4-}$, $H_7Mo_{12}O_{41}^{3-}$; $HW_6O_{21}^{5-}$, $H_3W_6O_{21}^{3-}$, $H_2W_{12}O_{40}^{6-}$, $W_6O_{24}^{12-}$.

Die Anionen der Heteropolysäuren mit einem Heteratom werden im allgemeinen als $[B(W_3O_{10})_4]^{5-}$, $[Si(W_3O_{12})_4]^{4-}$, $[Ge(W_3O_{12})_4]^{4-}$, $[P(W_3O_{10})_4]^{3-}$, $[As(W_3O_{10})_4]^{3-}$ formuliert.

Unter den Peroxogruppen enthaltenden Anionen sind beispielsweise bekannt: Diperoxo-orthovanadat $[VO_2(O_2)_2]^{3-}$ Dioxomonoperoxo- $[NbO_2(O_2)]^{-}$ und Tetraperoxoniobat $[Nb(O_2)_4]^{3-}$ und die entsprechenden -tantalate; $[HMoO_2(O_2)_2]^{-}$, $[Mo(O_2)_4]^{2-}$, $[W_2O_3(O_2)_4]^{2-}$, $[W(O_2)_4]^{2-}$.

Bevorzugte Salze der Formel $[R^1R^2R^3R^4N]_x\ X^{x-}$ (I) liegen in Form makroskopisch kugelförmiger Teilchen mit einem Durchmesser von 0,01 bis 3,0 mm, einer spezifischen Oberfläche nach BET von größer 0 bis 1000 $m^2/g$, einem spezifischen Porenvolumen von größer 0 bis 6 ml/g, einer Schuttdichte von 100 bis 1000 g/l sowie einer volumenbezogenen Trockensubstanz von 100 bis 900 g/l vor. Diese Stoffeigenschaften weisen im wesentlichen die als Ausgangsverbindung zu ihrer Herstellung vorzugsweise eingesetzten Salze der allgemeinen Formel $[R^1R^2R^3R^4N]_y\ Y^{y-}$ (III) auf, die gemäß DE-PS 38 00 564 zugänglich sind und worin $R^1$, $R^2$, $R^3$, $R^4$ die gleiche Bedeutung haben wie in Formel (I) und Y für ein vorbekanntes Anion der Wertigkeit y von 1 bis 3 steht. Auch wenn die polymeren Organosiloxanaminverbindungen gemäß DE-PS 38 00 563 der Formel $R^1R^2R^3N$ (IV), worin $R^1$, $R^2$ und $R^3$ wieder die gleiche Bedeutung wie in Formel (I) haben, als Ausgangsstoffe zur Herstellung der Salze der Formel (I) dienen, gelangt man zu Salzen mit den gewünschten Stoffdaten. Diese Stoffdaten sind hinsichtlich der Verwendung der Stoffe als Katalysator für Oxidationsreaktionen vorteilhaft, weil damit eine definierte Porenstruktur, eine hohe mechanische Stabilität und leichte Handhabung einhergehen.

Weitere bevorzugte erfindungsgemäße Salze sind dadurch gekennzeichnet, daß $R^1$, $R^2$ und $R^3$ gleich sind und eine Gruppe gemäß Formel (II) bedeuten, worin $R^5$ für eine lineare oder verzweigte Alkylengruppe steht, und $R^4$ Wasserstoff oder vorzugsweise eine Methylgruppe bedeutet. Besonders geeignet sind Salze mit der Formeleinheit

$$[H_3C\text{-}N(CH_2\text{-}CH_2\text{-}CH_2\text{-}SiO_{3/2})_3 \cdot a\ SiO_2]_x\ X^{x-}$$

oder

$$[H\text{-}N(CH_2\text{-}CH_2\text{-}CH_2\text{-}SiO_{3/2})_3 \cdot a\ SiO_2]_x\ X^{x-},$$

worin a einen Wert zwischen 0 und 3 einnimmt.

Wie bereits erwähnt, lassen sich die erfindungsgemäßen Salze als Katalysator für Oxidationsreaktionen unter Verwendung von Peroxoverbindungen, insbesondere Wasserstoffperoxid, verwenden. Eine besonders hohe Wirksamkeit zeigen Salze, in welchen das Anion X ausgewählt ist aus der Reihe der Mono-, Hexa-, Dodekawolframate, der Mono-, Hexa-, Hepta- und Oktamolybdate, Wolframatophosphat, Wolframatosilikat oder Wolframatoborat, wobei die Wolframate und Wolframatophosphate besonders bevorzugt sind. Da die katalytisch wirksamen polymergebundenen Anionen während der Oxidationsreaktion möglichst nicht vom Polymer abgelöst werden sollen, sind Salze mit $R^3$ und $R^4$ ungleich Wasserstoff bevorzugt. Zudem sind bei

der Verwendung der Salze solche Bedingungen zu vermeiden, bei welchen die Anionen X in Kationen des katalytisch wirksamen Elements überführt und/oder in anderer Weise, etwa durch die Anwesenheit großer Mengen austauschfähiger anderer Anionen als X, aus dem fixierten Zustand gelost und aus dem System ausgetragen werden könnten.

Die definierte, auf den jeweiligen Anwendungsfall leicht anpaßbare Porenstruktur der Salze, insbesondere eine solche mit großen Porendurchmessern, gewährleistet eine sichere Fixierung großer, ggf. auch Peroxogruppen enthaltender Oxo-, Isopolyoxo- und Heteropolyoxoanionen der Elemente V, Nb, Ta, Mo und W. Die erfindungsgemäßen polymeren Salze sind im Gegensatz zu vorbekannten Anionenaustauschern auf der Basis rein organischer Polymerer oxidationsstabil und weisen auch eine höhere Temperaturstabilität und, insbesondere in Form der makroskopisch kugelförmigen Teilchen, eine hohe mechanische Festigkeit auf, die den Einsatz der polymeren Salze in Rührreaktoren, Wirbelbett- oder Festbettreaktoren ermöglichen. Die vorbekannten polymeren Salze der Formel (III) sind keine Oxidationskatalystoren. Die erfindungsgemäßen Salze aktivieren Peroxoverbindungen, insbesondere solche aus der Reihe Wasserstoffperoxid und $H_2O_2$ freisetzender Verbindungen wie Alkali- und Erdalkaliperoxide, Percarbonate, Perborate, Percarbamid, Peroxophosphate, Peroxomono- und -disulfate. Die erfindungsgemäßen Salze eignen sich hervorragend als Katalysator zur Epoxidation aliphatischer und cycloaliphatischer Olefine, zur Herstellung vicinaler Diole aus Olefinen sowie zu weiteren Oxidationsreaktionen, wie sie aus dem Stand der Technik bekannt sind und wozu bisher wasserlösliche Salze der Oxo-, Isopolyoxo- und Heteropolyoxosäuren der Elemente V, Nb, Ta, Mo und W oder die Säuren selbst Einsatz fanden, jedoch eine aufwendige Aufarbeitung nach sich zogen. Durch die Verwendung der erfindungsgemäßen wasserunlöslichen polymeren Salze gestaltet sich die Aufarbeitung des Reaktionsgemischs nach der Oxidation sehr einfach.

Die erfindungsgemäßen Salze lassen sich auch in der Abwasserbehandlung als Katalysator zur Oxidation organischer Abwasserinhaltsstoffe mittels Peroxoverbindungen verwenden. Da in dem gattungsgemäßen Verfahren der EP-B 0 221 689 wasserlösliche Wolfram-Sauerstoffverbindungen als Katalysator eingesetzt werden, um organische Sulfide mit $H_2O_2$ zu oxidieren, verbleibt der teure Katalysator in dem behandelten Wasser, wodurch die Wirtschaftlichkeit gemindert wird und ein weiterer Schadstoff im Wasser verbleibt. Durch die Verwendung der erfindungsgemäßen Salze, welche in dem zu behandelten Wasser völlig unlöslich sind, gestaltet sich das Verfahren nicht nur einfach, sondern auch wirtschaftlich und umweltverträglich.

Die erfindungsgemäßen polymeren Salze der Formel (I) lassen sich durch Austausch des Anions eines vorbekannten Salzes der Formel (III), worin Y vorzugsweise Chlorid, Phosphat oder Hydroxid bedeutet, gegen das Anion X nach dem statischen oder dynamischen Austauschprinzip gewinnen. Der Austausch erfolgt üblicherweise in Gegenwart einer wäßrigen Lösung, welche zunächst eine ausreichend wasserlösliche, in ein Anion und Kation dissoziierbare Verbindung des Anions X, insbesondere der Säure $H_zX$ oder eines Alkali- oder Ammoniumsalzes dieser Säure, enthält und das ausgetauschte Anion Y aufnimmt. Das Verfahren zur Herstellung der Salze der Formel (I) ist somit dadurch gekennzeichnet, daß man als dissoziierbare Verbindung eine solche der Formel $A_zX$ verwendet, worin A für ein Kation aus der Reihe $H^+$, $Li^+$, $Na^+$, $K^+$ sowie $NH_4^+$, X für ein Anion einer Monooxo-, Isopolyoxo- oder Heteropolyoxosäure der Elemente Vanadium, Niob, Tantal, Molybdän oder Wolfram steht und z die zum Ladungsausgleich erforderliche Zahl Kationen angibt, wobei das Anion der Heteropolysäure Bor, Silicium, Germanium, Phosphor, Arsen, Jod, Tellur, Zinn, Titan, Zirkonium, Hafnium oder Cer als Heteroelement aufweist und eine oder mehrere der Oxogruppen des Anions X durch Peroxogruppen ersetzt sein können und, sofern erwünscht, nach dem Ionenaustausch eine oder mehrere der Oxogruppen des Anions des zunächst gebildeten polymeren Organosiloxanammoniumsalzes $[R^1R^2R^3R^4N]_xX$durch Behandlung mit einer wäßrigen Wasserstoffperoxidlösung in Peroxogruppen überführt. Ein vollständiger Austausch erfordert mindestens die stöchiometrische Menge der Verbindung des Anions X. Prinzipiell ist es auch möglich, polymere Salze mit mehr als einem Anion aus der Reihe X oder solche mit X und Y zu gewinnen und als Katalysator für Oxidationsreaktionen zu verwenden. Wird der Austausch unter Verwendung von neutral, basisch oder sauer reagierenden Salzen des Anions X durchgeführt, kann es notwendig sein, durch Zugabe von Säuren oder Laugen einen vorherbestimmten pH-Wert einzustellen und während des Austauschs aufrechtzuerhalten. Vorzugsweise wird der pH-Wert im Bereich von 4 bis 7, insbesondere 4,5 bis 6 und ganz besonders etwa 5, konstantgehalten. Das Ionenaustauschverfahren, das auch in der DE-PS 38 00 564 beschrieben ist, umfaßt zusätzlich auch die Neutralisation eines Salzes der Formel (III), worin Y Hydroxid ist. Will man das Anion X in einem halogenidfreien Medium einführen, um z. B. im sauren Medium arbeiten zu können und eine sehr gleichmäßige Beladung zu erhalten, werden Salze (III) mit Y beispielsweise Sulfat, Phosphat, Nitrat, Carbonat oder Acetat bevorzugt eingesetzt.

Gemäß einem alternativen Verfahren zur Herstellung von Salzen der Formel (I) werden polymere Organosiloxanamine der allgemeinen Formel (IV)

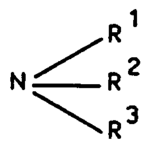

(IV) ,

wie sie in der DE-PS 38 00 563 beschrieben sind und in welcher $R^1$, $R^2$, $R^3$ dieselbe Bedeutung haben wie in Formel (I), mit einer stöchiometrischen, bevorzugt überschüssigen Menge einer anorganischen Protonensäure einer Monooxo-, Isopolyoxo- oder Heteropolyoxosäure der Formel $H_zX$ der Elemente Vanadium, Niob, Tantal, Molybdän oder Wolfram, worin z die zum Ladungsausgleich erforderliche Zahl Protonen und X das Anion bedeuten, umgesetzt; Heteroatom in den Heteropolysäuren können wiederum Bor, Silicium, Germanium, Phosphor und Arsen sein. Sofern erwünscht, können nach der Umsetzung eine oder mehrere der Oxogruppen des zunächst gebildeten polymeren Organosiloxanammoniumsalzes der Formel $[R^1R^2R^3NH]_x$Xdurch Behandlung mit einer wäßrigen Wasserstoffperoxidlösung in Peroxogruppen überführt werden, wobei Salze der Formel $[R^1R^2R^3NH]_{x'}$ X' entstehen, wobei X' ein Proxogruppenenthaltendes Anion auf der Basis des Anions X und x' seine Wertigkeit ist. Die Überführung von Oxogruppen in Peroxogruppen erfolgt vorzugsweise bei 20 bis 100 °C, insbesondere bei 40 bis 80 °C, unter Verwendung wäßriger $H_2O_2$-Lösungen mit einem Gehalt im Bereich von vorzugsweise 5 bis 30 Gew.-% $H_2O_2$.

In den Herstellverfahren, ausgehend von Salzen der Formel (III) als auch Aminen der Formel (IV), werden die besonders bevorzugten wolfram- und molybdänhaltigen Salze unter Verwendung der wolfram- bzw. molybdänhaltigen Säuren $H_zX$ gewonnen; unter den wolframhaltigen Säuren werden die Mono- und Hexawolframsäure sowie Tetratriwolframatokieselsäure und Tetratriwolframatophosphorsäure bevorzugt.

Es versteht sich, daß sich die Struktur der Anionen X in den polymeren Salzen der Formel (I) durch Veränderung des pH-Werts verändern kann - verstärkte Kondensation bei Verschiebung des pH-Wertes vom alkalischen in den sauren Bereich. Bei der Behandlung der Salze (I) mit $H_2O_2$-Lösungen kann parallel zum Austausch von Oxogruppen gegen Peroxogruppen eine Strukturänderung einhergehen. Der Fachmann wird den hieraus resultierenden möglichen Einfluss der erfindungsgemäßen Salze auf die katalytische Wirksamkeit in Oxidationsreaktionen unter Verwendung von Peroxoverbindungen in orientierenden Versuchen ermitteln.

Die nachfolgenden Beispiele verdeutlichen die Herstellung der erfindungsgemäßen Salze sowie deren Verwendung.

**Beispiel 1**

1 l eines gemäß Beispiel 1 der DE-PS 38 00 564 hergestellten polymeren Organosiloxanammoniumsalzes der Formeleinheit $[(H_3C)N(CH_2CH_2CH_2SiO_{3/2})_3]^+Cl^-$ wurden in 1,5 l Wasser eingeschlämmt. Hierzu wurden 32,99 g $Na_2WO_4 \cdot 2H_2O$, gelöst in 100 ml Wasser, zugegeben und mit 1 molarer HCl der pH-Wert auf 5,0 eingestellt. Die Mischung wurde bei Raumtemperatur 3 Stunden gerührt, dabei wurde durch Zugabe von 1 molarer HCl der pH-Wert bei 5,0 konstant gehalten. Das Ammoniumsiloxan wurde abgesaugt, gewaschen und wasserfeucht für Oxidationsreaktionen verwendet.

**Beispiel 2**

Ein gemäß Beispiel 3 der DE-PS 38 00 563 hergestelltes polymeres Organosiloxanamin der Formeleinheit $N(CH_2\text{-}CH_2\text{-}CH_2\text{-}SiO_{3/2})_3 \cdot 3SiO_3$ mit kugelförmigen Teilchen in einer Körnung von 95 % zwischen 0,1 und 1,4 mm wurde durch einstündige Behandlung mit 3 gew.-%iger Salzsäure (1 l pro 168 g Polymer) in das entsprechende polymere Ammoniumchlorid überführt, mit Wasser gewaschen und auf der Nutsche trocken gesaugt.

300 g des so hergestellten polymeren Organosiloxanammoniumchlorid wurden mit 56,2 g $H_3[P(W_{12}O_{40})] \cdot xH_2O$ (17 Gew.-% Wasser), gelöst in 1 l Wasser, versetzt. Mit 1 m NaOH wurde ein pH-Wert von 5,0 eingestellt und konstant gehalten und 5 Stunden bei Raumtemperatur gerührt. Das Organosiloxan wurde abgesaugt und in 1 l 10 gew.-%ige $H_2O_2$-Lösung eingetragen und 3 Stunden bei 60 °C gerührt, dann gewaschen, abgesaugt und wasserfeucht für Katalyseversuche eingesetzt.

**Beispiel 3**

Ein gemäß Beispiel 1 der DE-PS 38 00 563 erhaltenes polymeres Organosiloxanamin der Formel $N(CH_2\text{-}CH_2\text{-}CH_2\text{-}SiO_{3/2})_3$ wurde nach 4-stündiger Trocknung bei 80 °C, 4-stündiger Trocknung bei 100 °C

und 16-stündiger Trocknung bei 130 °C in Wasser eingeschlämmt. Die Säule wurde dann mit 3 %iger, wäßriger HCl-Lösung binnen 1 Stunde beschickt und dann mit 2 l Wasser gewaschen. Nach 4-stündiger Trocknung bei 80 °C und 10-stündiger Trocknung bei 100 °C wurden das Ammoniumchlorid der Formel $\{HN[(CH_2)_3SiO_{3/2}]_3\}^+Cl^-$ mit den Kenndaten

| | |
|---|---|
| Korngröße: | 0,3-2,0 mm |
| $Cl^-$-Gehalt: | 10,6 % |
| Spez. Oberfläche: | 152 $m^2/g$ |
| Spez. Porenvolumen: | 0,6 ml/g |
| Schüttdichte: | 620 g/l |
| Volumenbezogene Trockensubstanz: | 500 g/l |

erhalten. Gemäß Beispiel 1 wurde Chlorid gegen Wolframat ausgetauscht.

**Beispiel 4**

1 l des in Beispiel 1 eingesetzten polymeren Organosiloxanammoniumchlorids wurde in 500 ml Wasser aufgeschlämmt. Hierzu wurden 24,39 g $NaVO_3$, gelöst in 200 ml Wasser, gegeben und mit 1 m HCl ein pH-Wert von 5,0 eingestellt und konstant gehalten und bei Raumtemperatur gerührt. Nach 1 Stunde war die überstehende Lösung farblos und das Organosiloxan intensiv gelb gefärbt. Es wurde noch 5 Stunden gerührt, dann abgesaugt, das Produkt gewaschen und dann in 500 ml 10 gew.-%ige $H_2O_2$-Lösung eingetragen und 1 Stunde bei Raumtemperatur gerührt. Das nun braungelbe Produkt wurde abgesaugt, mit Wasser gewaschen und an der Luft bei Raumtemperatur getrocknet.

**Beispiel 5**

Analog Beispiel 4 wurde das polymere Organosiloxanammoniumchlorid mit 24,2 g $Na_2MoO_4 \cdot 2H_2O$ (anstelle des Natriumvanadats) umgesetzt. Das resultierende polymere Molybdat färbte sich nach Eintrag in eine 10 gew.-%ige wäßrige $H_2O_2$-Lösung rötlich-braun.

**Beispiel 6**

Herstellung von Glycid durch Epoxidation von Allylalkohol: In einer temperierbaren Umlaufapparatur, in deren Reaktor ein Katalysator-Festbett mit dem Salz des Beispiels 1 angeordnet war, wurde ein Gemisch aus 37,9 Gew.-% Allylalkohol, 54,4 Gew.-% Wasser und 7,7 Gew.-% Wasserstoffperoxid bei 55 °C über das Katalysatorbett gepumpt. Der verwendete Katalysator wurde bereits zehnmal in entsprechenden Ansätzen eingesetzt. Nach 4 Stunden ist das Wasserstoffperoxid vollständig umgesetzt, und das Reaktionsgemisch enthält 11,9 Gew.-% Glycid, entsprechend 72,2 % der Th., bezogen auf Allylalkohol. Glycid läßt sich in an sich bekannter Weise destillativ aus dem aus der Umlaufapparatur abgezogenen Reaktionsgemisch gewinnen.

Es zeigte sich, daß die Katalysatorwirksamkeit des nach Beispiel 1 bzw. 2 frisch hergestellten Katalysators von Ansatz zu Ansatz zunahm.

**Beispiel 7**

Beispiel 6 wurde unter Verwendung des Salzes des Beispiels 2, das bereits zehnmal für diese Epoxidation eingesetzt wurde, wiederholt. Der Umsatz an $H_2O_2$ betrug nach 4 Stunden 100 %, die Ausbeute an Glycid, bezogen auf Allylalkohol, 76 %.

**Patentansprüche**

1. Polymere, ein kieselsäureartiges Grundgerüst aufweisende Organosiloxanammoniumsalze von Oxosäuren, bestehend aus Einheiten der allgemeinen Formel

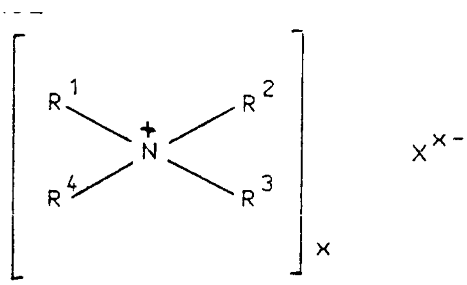

(I)

in welcher $R^1$ und $R^2$ gleich oder verschieden sind und eine Gruppe der allgemeinen Formel

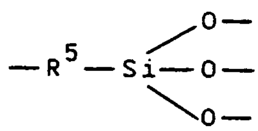

(II)

bedeuten, wobei die Stickstoffatome in (I) über die Reste $R^5$ mit den Siliciumatomen in (II) verbunden sind und $R^5$ eine Alkylengruppe mit 1 bis 10 C-Atomen, eine Cycloalkylengruppe mit 5 bis 8 C-Atomen oder eine Einheit der allgemeinen Formel

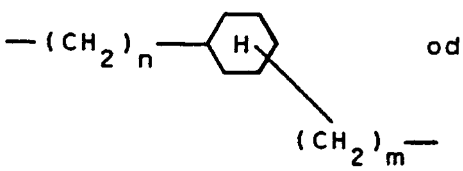

oder

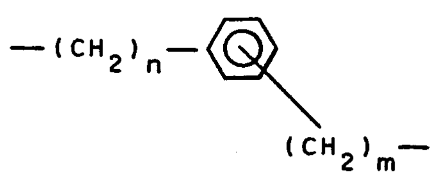

darstellt, in der n eine Zahl von 1 bis 6 ist und die Zahl der stickstoffständigen Methylengruppen angibt und m eine Zahl von 0 bis 6 ist, und wobei die freien Valenzen der an das Siliciumatom gebundenen Sauerstoffatome wie bei Kieselsäuregerüsten durch Siliciumatome weiterer Gruppen der Formel (II) und/oder mit den Metallatomen einer oder mehrerer der vernetzenden Brückenglieder

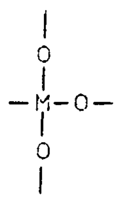 oder 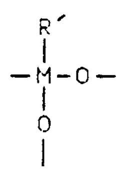 oder 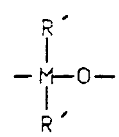 oder 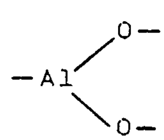 oder 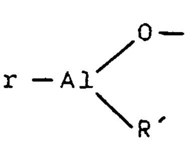

abgesättigt sind, wobei M ein Silicium-, Titan- oder Zirkoniumatom und R' eine lineare oder verzweigte Alkylgruppe mit 1 bis 5 C-Atomen ist und das Verhältnis der Siliciumatome aus den Gruppen der allgemeinen Formel (II) zu den Metallatomen in den Brückengliedern 1:0 bis 1:10 beträgt, und in welcher $R^3$ gleich $R^1$ oder $R^2$ oder Wasserstoff, eine lineare oder verzweigte Alkylgruppe aus 1 bis 20 C-Atomen, eine aus 5 bis 8 C-Atomen bestehende Cycloalkylgruppe oder die Benzylgruppe ist und $R^4$ gleich Wasserstoff, eine lineare oder verzweigte Alkylgruppe mit 1 bis 20 C-Atomen oder eine aus 5 bis 8 C-Atomen bestehende Cycloalkyl-, Benzyl-, Allyl-, Propargyl-, Chlorethyl-, Hydroxyethyl-, Chlorpropylgruppe und X ein Oxoanion mit der Ladungszahl x ist,
dadurch gekennzeichnet,
daß X ein Anion einer Monooxo-, Isopolyoxo- oder Heteropolyoxosäure der Elemente Vanadium, Niob, Tantal, Molybdän oder Wolfram ist, wobei eine oder mehrere Oxogruppen des Anions durch Peroxogruppen ersetzt sein können und ein Element aus der Reihe Bor, Silicium, Germanium, Phosphor, Arsen, Jod, Tellur, Zinn, Titan, Zirkonium, Hafnium und Cer als Heteroatom in den Heteropolyoxysäuren fungiert.

**2.** Polymere Organosiloxanammoniumsalze nach Anspruch 1, dadurch gekennzeichnet, daß sie in Form makroskopisch kugelförmiger Teilchen mit einem Durchmesser von 0,01 bis 3,0 mm, einer spezifischen Oberfläche nach BET von größer 0 bis 1000 $m^2/g$, einem spezifischen Porenvolumen von größer 0 bis 6 ml/g, einer Schüttdichte von 100 bis 1000 g/l sowie einer volumenbezogenen Trockensubstanz von 100 bis 900 g/l vorliegen.

**3.** Polymere Organosiloxanammoniumsalze nach Anspruch 1 oder 2, dadurch gekennzeichnet, daß X ausgewählt ist aus der Reihe der Mono-, Hexa-, Dodekawolframate, der Mono-, Hexa-, Hepta- und Oktamolybdate, Wolframatophosphat, Wolframatosilikat oder Wolframatoborat, wobei die Wolframate und Wolframatophosphate besonders bevorzugt sind.

**4.** Polymere Organosiloxanammoniumsalze nach einem oder mehreren der Ansprüche 1 bis 3, dadurch gekennzeichnet, daß $R^1$, $R^2$ und $R^3$ gleich sind und eine Gruppe gemäß Formel II bedeuten, worin $R^5$ für eine lineare oder verzweigte Alkylengruppe steht, und $R^4$ Wasserstoff oder vorzugsweise eine Methylgruppe bedeutet.

**5.** Polymere Organosiloxanammoniumsalze nach einem oder mehreren der Ansprüche 1 bis 4, dadurch gekennzeichnet, daß sie aus Einheiten der Formel

$[H_3C\text{-}\overset{+}{N}(CH_2\text{-}CH_2\text{-}CH_2\text{-}SiO_{3/2})_3 \cdot a\ SiO_2]_x\ X^{x-}$

oder

$[H\text{-}\overset{+}{N}(CH_2\text{-}CH_2\text{-}CH_2\text{-}SiO_{3/2})_3\ .\ a\ SiO_2]_x\ X^{x-}$

bestehen, worin a einen Wert zwischen 0 und 3 einnimmt.

**6.** Verfahren zur Herstellung Polymerer Organosiloxanammoniumsalze der Ansprüche 1 bis 5 durch Umsetzen eines polymeren Organosiloxanammoniumsalzes mit kieselsäureartigem Grundgerüst, bestehend aus Einheiten der allgemeinen Formel

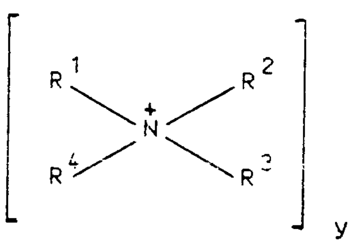

$Y^{y-}$ (III)

in welcher $R^1$ und $R^2$ gleich oder verschieden sind und eine Gruppe der allgemeinen Formel

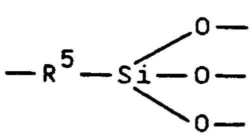

(II)

bedeuten, wobei die Stickstoffatome in (III) über die Reste $R^5$ mit den Siliciumatomen in (II) verbunden sind und $R^5$ eine Alkylengruppe mit 1 bis 10 C-Atomen, eine Cycloalkylengruppe mit 5 bis 8 C-Atomen oder eine Einheit der allgemeinen Formel

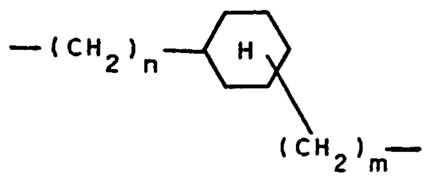 oder 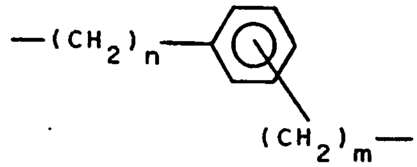

darstellt, in der n eine Zahl von 1 bis 6 ist und die Zahl der stickstoffständigen Methylengruppen angibt und m eine Zahl von 0 bis 6 ist, und wobei die freien Valenzen der an das Siliciumatom gebundenen Sauerstoffatome wie bei Kieselsäuregerüsten durch Siliciumatome weiterer Gruppen der Formel (II) und/oder mit den Metallatomen einer oder mehrerer der vernetzenden Brückenglieder

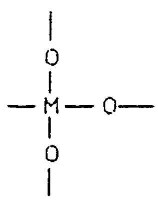 oder 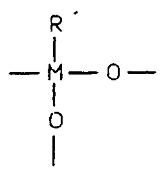 oder 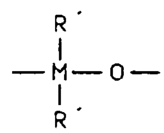

oder

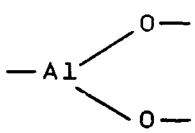 oder 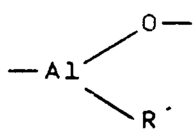

abgesättigt sind, wobei M ein Silicium-, Titan- oder Zirkoniumatom und R' eine lineare oder verzweigte Alkylgruppe mit 1 bis 5 C-Atomen ist und das Verhältnis der Siliciumatome aus den Gruppen der allgemeinen Formel (II) zu den Metallatomen in den Brückengliedern 1:0 bis 1:10 beträgt, und in welcher $R^3$ gleich $R^1$ oder $R^2$ oder Wasserstoff, eine lineare oder verzweigte Alkylgruppe aus 1 bis 20 C-Atomen, eine aus 5 bis 8 C-Atomen bestehende Cycloalkylgruppe oder die Benzylgruppe ist und $R^4$ gleich Wasserstoff, eine lineare oder verzweigte Alkylgruppe mit 1 bis 20 C-Atomen oder eine aus 5 bis 8 C-Atomen bestehende Cycloalkyl-, Benzyl-, Allyl-, Propargyl-, Chlorethyl-, Hydroxyethyl-, Chlorpropylgruppe und Y ein Anion mit der Wertigkeit von y gleich 1 bis 3 aus der Gruppe Halogenid, Hypochlorit, Sulfat, Hydrogensulfat, Nitrit, Nitrat, Phosphat, Dihydrogenphosphat, Hydrogenphosphat, Carbonat, Hydrogencarbonat, Hydroxid, Chlorat, Perchlorat, Chromat, Dichromat, Cyanid, Cyanat, Rhodanid, Sulfid, Hydrogensulfid, Selenid, Tellurid, Borat, Metaborat, Azid, Tetrafluorborat, Tetraphenylborat, Hexafluorophosphat, Formiat, Acetat, Propionat, Oxalat, Trifluoroacetat, Trichloracetat oder Benzoat ist, mit einer in wäßriger Lösung in ein Kation und Anion dissoziierbaren Verbindung mit einem anderen Anion als Y nach dem statischen oder dynamischen Ionenaustauscherprinzip, Waschen des polymeren Salzes und bei Bedarf Trocknen,
dadurch gekennzeichnet,
daß man als dissoziierbare Verbindung eine solche der Formel $A_zX$ verwendet, worin A für ein Kation aus der Reihe $H^+$, $Li^+$, $Na^+$, $K^+$ sowie $NH_4^+$, X für ein Anion einer Monooxo-, Isopolyoxo- oder Heteropolyoxosäure der Elemente Vanadium, Niob, Tantal, Molybdän oder Wolfram steht und z die zum Ladungsausgleich erforderliche Zahl Kationen angibt, wobei das Anion der Heteropolysäure Bor, Silicium, Germanium, Phosphor, Arsen, Jod, Tellur, Zinn, Titan, Zirkonium, Hafnium oder Cer als Heteroelement aufweist und eine oder mehrere der Oxogruppen des Anions X durch Peroxogruppen ersetzt sein können und, sofern erwünscht, nach dem Ionenaustausch eine oder mehrere der Oxogruppen des Anions des zunächst gebildeten polymeren Organosiloxanammoniumsalzes $[R^1R^2R^3R^4N]_xX$ durch Behandlung mit einer wäßrigen Wasserstoffperoxidlösung in Peroxogruppen überführt.

**7.** Verfahren nach Anspruch 6,
dadurch gekennzeichnet,

daß man die polymeren Organosiloxanammoniumsalze der Formel (III) mit einer wäßrigen Lösung eines Salzes der Formel $A_zX$ unter Konstanthaltung des pH-Werts auf 4 bis 7, vorzugsweise 4,5 bis 6 und insbesondere etwa 5, umsetzt.

**8.** Verfahren zur Herstellung polymerer Organosiloxanammoniumsalze der Ansprüche 1 bis 5 durch Umsetzen eines polymeren Organosiloxanamins mit kieselsäureartigem Grundgerüst, bestehend aus Einheiten der allgemeinen Formel

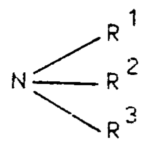

(IV),

in welcher $R^1$, $R^2$ und $R^3$ dieselbe Bedeutung haben wie in Formel (I), mit einer stöchiometrischen, bevorzugt überschüssigen Menge einer anorganischen Protonensäure in Gegenwart von Wasser,
dadurch gekennzeichnet,
daß man als Protonensäure eine Mono-oxo-, Isopolyoxo- oder Heteropolyoxosäure der Formel $H_zX$ der Elemente Vanadium, Niob, Tantal, Molybdän oder Wolfram, worin z die zum Ladungsausgleich erforderliche Zahl Protonen angibt und X das Anion bedeuten und die Heteropolysäuren Bor, Silicium, Germanium, Phosphor, Arsen, Jod, Tellur, Zinn, Titan, Zirkonium, Hafnium oder Cer als Heteroelement aufweisen, verwendet und, sofern erwünscht, nach der Umsetzung eine oder mehrere der Oxogruppen des zunächst gebildeten polymeren Organosiloxanammoniumsalzes $[R^1R^2R^3NH]_xX$ durch Behandlung mit einer wäßrigen Wasserstoffperoxidlösung in Peroxogruppen überführt.

**9.** Verfahren nach einem der Ansprüche 6 bis 8,
dadurch gekennzeichnet,
daß man als Verbindung der Formel $H_zX$ eine wolfram-oder molybdänhaltige Oxosäure, insbesondere Mono- oder Hexawolframsäure oder Tetra(triwolframato)-phosphorsäure, einsetzt.

**10.** Verwendung der polymeren Organosiloxanammoniumsalze der Ansprüche 1 bis 5 als Katalysator zur Durchführung von Oxidationsreaktionen unter Verwendung von Peroxoverbindungen, insbesondere Wasserstoffperoxid, als Oxidationsmittel.